# FASCICULE DE BREVET EUROPEEN

(11) **EP 0 515 236 B1**
(45) Date de publication et mention de la délivrance du brevet: **01.03.1995**
(21) Numéro de dépôt: 92400870.9
(22) Date de dépôt: 27.03.1992
(51) Int. Cl.: F16C 1/22

(54) **Organe flexible pour la transmission d'efforts**
Biegsames Organ für Kraftübertragung
Force transmitting flexible member

(30) Priorité: 15.05.1991 FR 9105901
(43) Date de publication de la demande: 25.11.1992
(73) Titulaire: AUTOMOBILES PEUGEOT, 75116 Paris (FR); AUTOMOBILES CITROEN, 92200 Neuilly-sur-Seine (FR)
(72) Inventeur: Germain, Gérard, F-25200 Bethoncourt (FR)
(74) Mandataire: Obolensky, Michel

(56) Documents cités:
- DE-A- 2 553 479
- FR-A- 2 595 841

## Description

La présente invention concerne un organe flexible pour la transmission d'efforts.

L'invention concerne plus particulièrement un organe flexible du type comportant un câble de transmission d'efforts monté coulissant dans une gaine et un dispositif de réglage automatique de la longueur de la gaine.

L'invention concerne un organe flexible du type tirer-pousser, également connu sous le nom de câble "BOWDEN", qui permet d'effectuer par exemple la commande d'un embrayage, d'un frein ou d'un accélérateur d'un véhicule automobile.

L'invention concerne plus particulièrement les organes flexibles qui comportent une gaine incompressible longitudinalement, qui est par exemple constituée d'un fil métallique enroulé en hélice, dans laquelle coulisse librement le câble de transmission d'effort.

Un organe flexible de ce type est de conception particulièrement simple, mais son bon fonctionnement et sa parfaite efficacité nécessitent que le câble de transmission soit correctement tendu dans la gaine afin que son mouvement ne soit pas gêné.

Il est donc nécessaire, déjà lors du montage de l'organe flexible par exemple sur le véhicule automobile, d'effectuer un réglage de la longueur de la gaine afin de tenir compte des tolérances de fabrication du câble, de la gaine ainsi que des dispersions dimensionnelles des parties et composants du véhicule auquel sont reliées les extrémités du câble de transmission d'effort et de la gaine.

En outre, lors de l'utilisation, le câble a tendance à s'allonger sous l'effet des efforts qui lui sont appliqués, ce qui nécessite de procéder à un nouveau réglage des longueurs respectives de la gaine et/ou du câble. Les organes flexibles sont donc généralement équipés d'un dispositif de réglage automatique permettant d'éviter d'avoir à assurer manuellement les deux opérations de réglage qui viennent d'être mentionnées et essentiellement la seconde qui, normalement, est pratiquée dans le cadre de l'entretien régulier du véhicule.

FR-A-2 595 841 décrit un organe flexible du type mentionné précédemment dont le dispositif de réglage comporte deux éléments de réglage montés coulissant l'un par rapport à l'autre et munis chacun d'un embout, traversé par le câble, un ressort de réglage qui sollicite les deux éléments en coulissement dans le sens correspondant à l'allongement de la gaine et des moyens de verrouillage automatique en position réglée des deux éléments qui agissent par coincement sous l'effet d'un effort de compression longitudinal appliqué à la gaine.

Cependant la conception particulière de ce dispositif de réglage est complexe et ne donne pas satisfaction.

FR-A-2 553 479 décrit un dispositif de coincement de structures d'embouts tubulaires.

L'invention a pour but de proposer un organe flexible du type précité équipé d'un dispositif de réglage automatique de la longueur de la gaine qui soit de conception particulièrement simple et économique et qui permet de régler automatiquement la longueur de la gaine en fonction de celle du câble, tant lors du montage sur le véhicule qu'au fur et à mesure de l'utilisation de l'organe flexible.

A cet effet l'invention propose un organe flexible du type précité, caractérisé en ce qu'une tige rigide de réglage est fixée sur le premier embout du premier élément de réglage, et en ce que le second embout du second élément de réglage est équipé d'une patte de verrouillage qui s'étend transversalement par rapport à l'embout en formant un angle aigu par rapport à l'axe de ce dernier et qui comporte un orifice de verrouillage qui est traversé par la tige de réglage.

Selon d'autres caractéristiques de l'invention :
- le premier embout comporte une platine sur laquelle sont fixées deux tiges rigides de réglage agencées parallèlement de part et d'autre de l'axe du premier embout, et le second embout est équipé de deux pattes de verrouillage qui s'étendent transversalement dans deux directions opposées et dont chacune comporte un orifice de verrouillage traversé par l'une des tiges de réglage ;
- chaque patte de verrouillage comprend une première branche en forme de fourche qui est maintenue en appui contre la face transversale d'extrémité du second embout par la seconde extrémité du ressort de réglage qui est réalisé sous la forme d'un ressort hélicoïdal de compression traversé par le câble et dont la première extrémité prend appui sur le premier embout, et une seconde branche qui forme un angle aigu par rapport à la première branche dans laquelle est formé l'orifice de verrouillage ;
- une rondelle est interposée entre les deux premières branches des pattes de réglage ;
- les extrémités libres des tiges de réglage éloignées de la platine sont reliées entre elles par une entretoise comportant un trou central traversé par la gaine ;
- lorsque le dispositif de réglage est disposé entre deux tronçons de la gaine, les extrémités en vis-à-vis de ces tronçons sont fixées respectivement à l'un et à l'autre des deux embouts ; et
- lorsque le dispositif de réglage est monté à l'une des extrémités de l'organe flexible, le premier embout constitue l'embout de fixation de l'extrémité correspondante de l'organe flexible.

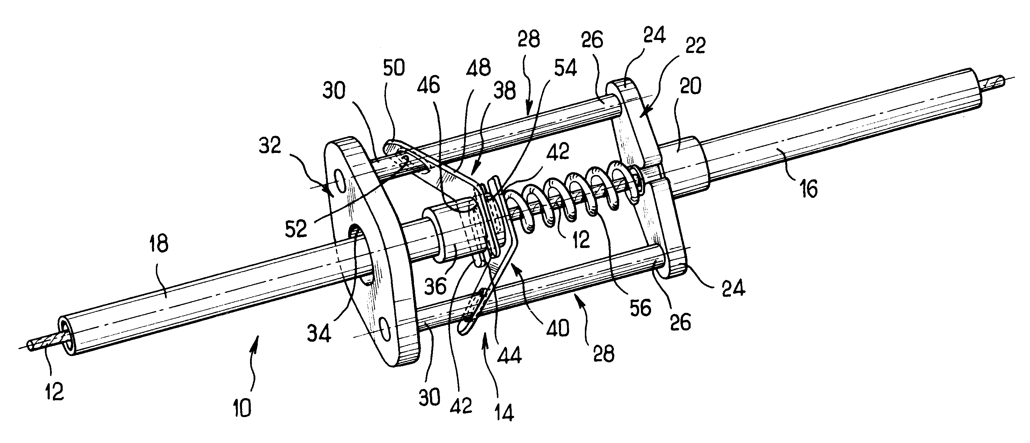

Des caractéristiques et avantages d'un mode de réalisation apparaîtront à la lecture de la description détaillée qui va suivre, donnée à titre d'exemple non limitatif, pour la compréhension de laquelle on se reportera au dessin annexé dont la figure unique est une vue en perspective d'une portion d'un organe flexible réalisé conformément aux enseignements de l'invention et dont le dispositif de réglage automatique est interposé entre deux tronçons de la gaine.

On reconnaît sur la figure un organe flexible 10 du type comportant un câble de transmission d'efforts 12 qui est monté coulissant dans une gaine flexible.

L'organe flexible 10 est équipé d'un dispositif 14 de réglage automatique de la longueur de la gaine qui, dans le mode de réalisation illustré à la figure, est interposé entre deux tronçons 16 et 18 de la gaine flexible.

Le premier tronçon 16 est équipé d'un embout de gaine 20 sur lequel est fixée une platine 22.

La platine 22 s'étend transversalement selon une direction perpendiculaire à l'axe général du premier embout 20 et chacune des extrémités opposées 24 de la platine reçoit l'extrémité 26 d'une tige rigide de réglage 28.

Les tiges de réglage 28 sont fixées sur la platine 22 de manière qu'elles soient parallèles entre elles et qu'elles s'étendent symétriquement de part et d'autre du premier embout 20.

Les extrémités opposées 30 des tiges 28 sont fixées dans une entretoise 32 dont la forme est sensiblement identique à celle de la platine 22 et qui comporte un trou central 34 pour le passage du second tronçon de gaine 18.

L'extrémité du second tronçon de gaine 18 est équipée d'un second embout de gaine 36 qui est disposé entre la platine 22 et l'entretoise 32.

Le dispositif de réglage automatique 14 est constitué par les tiges de réglage 28 et par des pattes 38 et 40 de verrouillage en position réglée.

Les deux pattes de réglage 38 et 40 sont identiques et on décrira maintenant en détail la structure et la forme de la première patte de réglage 38.

La patte de réglage 38 comporte une première branche 42 en forme de fourche dont l'évidement central 44 permet le passape du câble de transmission 12.

La première branche 42 est en appui plan contre la face transversale d'extrémité 46 du second embout 36.

La première branche 42 s'étend donc selon une direction sensiblement perpendiculaire à l'axe général du second embout 36.

La première branche 42 se prolonge par une seconde branche 48 qui forme un angle aigu par rapport à la première branche 42.

L'extrémité libre 50 de la seconde branche 48 de la patte de verrouillage 38 comporte un orifice de verrouillage 52 qui est traversé par la tige de réglage 28.

La première branche 42 de la seconde patte de verrouillage 40 est en appui indirect contre la face transversale 46 du second embout 36 avec interposition d'une rondelle 54, entre les branches respectives 42 des pattes 32 et 40.

Le dispositif de réglage automatique 14 comporte enfin un ressort hélicoïdal de compression 56 dont une première extrémité est en appui contre le premier embout 20 tandis que sa seconde extrémité prend appui contre la face en vis-à-vis de la première branche 42 de la seconde patte de verrouillage 40.

Le ressort de réglage 56 maintient ainsi les deux premières branches 42 des pattes de verrouillage 38 et 40 en appui plan contre la face transversale d'extrémité 46 du second embout 36.

Le ressort de réglage 56 est monté comprimé de manière à solliciter les différents composants du dispositif de verrouillage dans le sens correspondant à l'allongement de la gaine, c'est-à-dire dans le sens tendant à éloigner le second embout 36 du premier embout 20.

Chacun des orifices de verrouillage 52 peut être de contour circulaire ou elliptique et est dimensionné de manière à provoquer un verrouillage par coincement, du type à arc-boutement, sur la tige de réglage 28 lorsque, en fonctionnement, la gaine est soumise à un effort longitudinal de compression qui tend à rapprocher le premier embout 20 du second embout 36.

Lors des opérations de montage, par exemple sur un véhicule automobile, le dispositif de verrouillage 14 est mis en place de façon que les deux tronçons 16 et 18 de la gaine soient sollicités en éloignement l'un de l'autre et de manière qu'il reste bien entendu une portion du câble de transmission 12 à l'intérieur du dispositif de réglage 14 qui ne soit pas recouverte par le tronçon de gaine 18.

Il est donc ainsi possible de remédier aux éventuels dispersions de longueur entre les différents composants.

La compression du ressort 56 est suffisante pour assurer un bon appui transversal des branches 42 des pattes de verrouillage mais n'est pas suffisante pour agir sur la gaine de l'organe flexible qui est pratiquement incompressible.

Lorsque l'on exerce un effort de traction à l'aide de l'organe flexible, cet effort a tendance à rapprocher l'une de l'autre les extrémités en vis-à-vis des deux tronçons de la gaine mais les pattes de verrouillage 38 et 40 s'y opposent du fait de l'effet de coincement sur les tiges de réglage 28, tout déplacement relatif des deux tronçons de la gaine dans ce sens étant ainsi empêché.

Au contraire, lorsque l'effort appliqué à l'organe flexible est relâché, il se produit un effet de poussée appliqué au deux tronçons de la gaine qui a tendance à les éloigner l'un de l'autre. Sous l'effet de l'action du ressort de réglage 56, les pattes de verrouillage 38 et 40 sont entraînées simultanément avec le second embout 36 en éloignement du premier embout 20. De par la conception des pattes et l'orientation des secondes branches 48, ce mouvement relatif des deux embouts est rendu possible mais il est ensuite à nouveau impossible de provoquer un rapprochement des deux embouts.

La longueur des tiges de réglage 28 dépend bien entendu de la capacité de réglage que l'on désire conférer au dispositif 14.

Selon une variante non représentée, l'entretoise 32 peut être conformée en un capot de protection du dispositif de verrouillage.

Selon une autre variante non représentée, il est également possible d'agencer le dispositif de verrouillage 14 à l'une des deux extrémités de l'organe flexible, le premier embout 20 constituant dans ce cas l'embout de gaine proprement dit permettant d'assurer sa fixation sur un support fixe tel que par exemple un élément de structure d'un véhicule automobile.

## Revendications

1. Organe flexible (10) pour la transmission d'efforts du type comportant un câble de transmission d'efforts (12) monté coulissant dans une gaine (16, 18) et un dispositif (14) de réglage automatique de la longueur de la gaine, comportant deux éléments de réglage (28, 38) montés coulissant l'un par rapport à l'autre et munis chacun d'un embout (20, 36) traversé par le câble (12), un ressort de réglage (56) qui sollicite les deux éléments en coulissement dans le sens correspondant à l'allongement de la gaine et des moyens (52) de verrouillage automatique en position réglée des deux éléments qui agissent par coincement sous l'effet d'un effort de compression longitudinal appliqué à la gaine (16, 18), caractérisé en ce qu'une tige rigide de réglage (28) est fixée sur le premier embout (20) du premier élément de réglage, et en ce que le second embout (36) du second élément de réglage est équipé d'une patte de verrouillage (38) qui s'étend transversalement par rapport à l'embout (36) en formant un angle aigu par rapport à l'axe de ce dernier et qui comporte un orifice de verrouillage (52) qui est traversé par la tige de réglage (28).

2. Organe flexible selon la revendication 1, caractérisé en ce que le premier embout (20) comporte une platine (22) sur laquelle sont fixées deux tiges rigides de réglage (28) agencées parallèlement de part et d'autre de l'axe du premier embout (20), et en ce que le second embout (36) est équipé de deux pattes de verrouillage (38, 40) qui s'étendent transversalement dans deux directions opposées et dont chacune comporte un orifice de verrouillage (52) traversé par l'une des tiges de réglage (28).

3. Organe flexible selon l'une des revendications 1 ou 2, caractérisé en ce que chaque patte de verrouillage comprend une première branche (42) en forme de fourche qui est maintenue en appui contre la face transversale d'extrémité (46) du second embout (36) par la seconde extrémité du ressort de réglage (56) qui est réalisé sous la forme d'un ressort hélicoïdal de compression traversé par le câble (12) et dont la première extrémité prend appui sur le premier embout, et en ce que chaque patte de verrouillage (38, 40) comprend une seconde branche (48) qui forme un angle aigu par rapport à la première branche et dans laquelle est formé l'orifice de verrouillage (52).

4. Organe flexible selon la revendication 3 prise en combinaison avec la revendication 2, caractérisé en ce qu'une rondelle (54) est interposée entre les deux premières branches (42) des pattes de réglage (38, 40).

5. Organe flexible selon la revendication 2, caractérisé en ce que les extrémités libres (30) des tiges de réglage (28) éloignées de la platine (22) sont reliées entre elles par une entretoise (32) comportant un trou central (34) traversé par la gaine (18).

6. Organe flexible selon l'une quelconque des revendications 1 à 5, caractérisé en ce que le dispositif de réglage (14) est disposé entre deux tronçons de gaine (16, 18) dont les extrémités en vis-à-vis sont fixées respectivement à l'un (20) et à l'autre (36) des deux embouts.

7. Organe flexible selon l'une quelconque des revendications 1 à 5, caractérisé en ce que le dispositif de réglage (14) est monté à l'une des extrémités de l'organe flexible, le premier embout (20) constituant l'embout de fixation de l'extrémité correspondante de l'organe flexible.

## Claims

1. Flexible member (10) for the transmission of forces, of the type having a force transmission cable (12) mounted so as to slide in a sheath (16, 18) and a device (14) for automatically adjusting the length of the sheath, having two adjustment members (28, 38) mounted so as to slide with respect to each other and each provided with a connecting piece (20, 36) through which the cable (12) passes, an adjustment spring (56) which acts on the two members by sliding in the direction corresponding to the elongation of the sheath and means (52) for automatically locking the two members in the adjusted position which act by jamming under the effect of a longitudinal compression force applied to the sheath (16, 18), characterised in that a rigid adjustment rod (28) is fixed to the first connecting piece (20) of the first adjustment member, and in that the second connecting piece (36) of the second adjustment member is equipped with a locking lug (38) which extends transversely with respect to the connecting piece (36) forming an acute angle with respect to the axis of the latter and which has a locking orifice (52) through which the adjustment rod (28) passes.

2. Flexible member according to Claim 1, characterised in that the first connecting piece (20) has a platen (22) to which are fixed two rigid adjustment rods (28) arranged in parallel on each side of the axis of the first connecting piece (20), and in that the second connecting piece (36) is equipped with two locking lugs (38, 40) which extend transversely in two opposite directions and each of which has a locking orifice (52) through which one of the adjustment rods (28) passes.

3. Flexible member according to one of Claims 1 or 2, characterised in that each locking lug comprises a first arm (42) in the form of a fork which is held in abutment against the transverse end face (46) of the second connecting piece (36) by the second end of the adjustment spring (56) which is produced in the form of a helical compression spring through which the cable (12) passes and the first end of which bears on the first connecting piece, and in that each locking lug (38, 40) comprises a second arm (48) which forms an acute angle with respect to the first arm and in which the locking orifice (52) is formed.

4. Flexible member according to Claim 3 taken in combination with Claim 2, characterised in that a washer (54) is interposed between the two first arms (42) of the adjustment lugs (38, 40).

5. Flexible member according to Claim 2, characterised in that the free ends (30) of the adjustment rods (28) remote from the platen (22) are connected together by a strut (32) having a central hole (34) through which the sheath (18) passes.

6. Flexible member according to any one of Claims 1 to 5, characterised in that the adjustment device (14) is disposed between two lengths of sheath (16, 18), the facing ends of which are fixed respectively to one (20) and the other (36) of the two connecting pieces.

7. Flexible member according to any one of Claims 1 to 5, characterised in that the adjustment device (14) is mounted at one of the ends of the flexible member, the first connecting piece (20) constituting the connecting piece for fixing the corresponding end of the flexible member.

## Patentansprüche

1. Biegsames Organ (10) für die Kraftübertragung eines Typs, welcher ein innerhalb einer Hülse (16, 18) verschiebbar montiertes Kabel zur Kraftübertragung (12) sowie eine Vorrichtung (14) zur automatischen Einstellung der Länge der Hülse aufweist, zwei ineinander verschiebbar montierte und jeweils mit einem Endstück (20, 36), durch welches das Kabel (12) hindurchgeführt wird, versehene Einstellelemente (28, 38), eine Einstellfeder (56), welche die beiden Elemente in die der Verlängerung der Hülse entsprechende Richtung verschiebt, sowie Mittel zum automatischen Verriegeln der beiden Elemente in Einstellposition umfaßt, die unter Einwirken eines auf die Hülse (16, 18) ausgeübten Längsdrucks durch Verklemmen funktionieren,
**dadurch gekennzeichnet**, daß eine nicht biegsame Einstellstange (28) an dem ersten Endstück (20) des ersten Einstellelementes befestigt ist, und daß das zweite Enstück (36) des zweiten Einstellelementes mit einer Verriegelungslasche (38) versehen ist, die sich schräg zum Endstück (36) erstreckt, zu dessen Achse einen spitzen Winkel bildet und eine Verriegelungsöffnung (52) aufweist, durch welche die Einstellstange (28) hindurchgeführt wird.

2. Biegsames Organ nach Anspruch 1,
**dadurch gekennzeichnet**, daß das erste Endstück (20) eine Platte (22) aufweist, an der zwei nicht biegsame parallel beidseitig zur Achse des ersten Endstücks (20) angeordnete Einstellstangen befestigt sind, und daß das zweite Endstück (36) mit zwei Verriegelungslaschen (38, 40) ausgestattet ist, die sich schräg in zwei entgegengesetzte Richtungen erstrecken, wobei jede eine Verriegelungsöffnung (52) besitzt, durch welche jeweils eine der beiden Einstellstangen (28) hindurchgeführt wird.

3. Biegsames Organ nach einem der Ansprüche 1 oder 2,
**dadurch gekennzeichnet**, daß jede Verriegelungslasche einen ersten gabelförmigen Arm (42) umfaßt, die durch das zweite Ende der Einstellfeder (36) auf der querlaufenden Fläche des Endes (46) des zweiten Endstücks (36) gelagert wird, wobei die Einstellfeder aus einer schraubenförmigen Druckfeder besteht, durch die das Kabel (12) hindurchgeführt wird und deren erstes Ende auf dem ersten Endstück gelagert ist, und daß jede Verriegelungslasche (38, 40) einen zweiten Arm (48) besitzt, die zum ersten Arm einen spitzen Winkel bildet und in der die Verriegelungsöffnung (52) ausgeformt ist.

4. Biegsames Organ nach Anspruch 3 kombiniert mit Anspruch 2,
**dadurch gekennzeichnet**, daß eine Unterlegscheibe (54) zwischen den beiden ersten Armen (42) der Einstell-Laschen (38, 40) eingelegt ist.

5. Biegsames Organ nach Anspruch 2,
**dadurch gekennzeichnet**, daß die von der Platte (22) entfernten freien Enden (30) der Einstellstangen (28) durch ein Distanzstück (32) miteinander verbunden sind, welches mittig ein von der Hülse (18) durchlaufenes Loch (34) aufweist.

6. Biegsames Organ nach einem der Ansprüche 1 bis 5,
**dadurch gekennzeichnet**, daß die Einstellvorrichtung (14) zwischen zwei Teilabschnitten (16, 18) der Hülse angeordnet ist, deren gegenüberliegende Enden jeweils an dem einem (20) oder anderen (36) der beiden Endstücke befestigt sind.

7. Biegsames Organ nach einem der Ansprüche 1 bis 5,
**dadurch gekennzeichnet**, daß die Einstellvorrichtung (14) an einem der beiden Enden des biegsamen Organs montiert ist, wobei das erste Endstück (20) das Endstück zur Befestigung des entsprechenden Endes des biegsamen Organs darstellt.
